Europäisches Patentamt

European Patent Office

Office européen des brevets

(11) Publication number: **0 488 460 A1**

# EUROPEAN PATENT APPLICATION

(21) Application number: **91203059.0**

(22) Date of filing: **22.11.91**

(51) Int. Cl.5: **H04N 5/238**, H04N 5/225

(30) Priority: **29.11.90 NL 9002607**

(43) Date of publication of application:
**03.06.92 Bulletin 92/23**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Kemper, Nicolaas Rudolf**
**c/o INT. OCTROOIBUREAU B.V., Prof.**
**Holstlaan 6**
**NL-5656 AA Eindhoven(NL)**

(74) Representative: **Schoonheijm, Harry Barend et**
**al**
**INTERNATIONAAL OCTROOIBUREAU B.V.**
**Prof.Holstlaan 6**
**NL-5656 AA Eindhoven(NL)**

(54) Short integration time adjusted by a main and an auxiliary shutter blade in a camera.

(57) A camera (1) comprising a solid-state image sensor (2) has a shutter device (7) which comprises a main shutter blade (9) and an auxiliary shutter blade (10) secured to one and the same shaft (11), which blades (9, 10) are rotatable through a radiation path (5) towards a pick-up area (16) of the image sensor (2) to be exposed. By securing the main shutter blade (9) and the auxiliary shutter blade (10) at a small angle with respect to each other to one and the same shaft (11) it is achieved that notably in the case of short exposure periods increasing relative differences in the extent of exposure between parts of the pick-up area (16) are limited so that a reduced location-dependent exposure of the parts is realised.

The auxiliary shutter blade (10) is preferably small and/or transparent. An optionally gradual extent of transparency of the auxiliary shutter blade achieves, independent of the apertures of lenses to be arranged in the radiation path, a gradual variation of the exposure when shifting the initial instant of the exposure period.

FIG.2

EP 0 488 460 A1

The invention relates to a camera comprising a solid-state image sensor having a pick-up area for picking up images projected onto the image sensor *via* a radiation path, and a shutter device connected to the image sensor and comprising two shutter blades formed as sectors of a circle and being rotatable by drive means, which shutter blades comprise a main shutter blade and an auxiliary shutter blade for influencing the radiation path, the initial instant of a photosensitivity period of the pick-up area of the image sensor being determined by the shutter device and the final instant of the photosensitivity period occurring after interruption of the radiation path towards the image sensor by means of the main shutter blade.

A camera of this type is known from the published European Patent Application no. 377,914 in which the main shutter blade and the auxiliary shutter blade are each provided on separately rotatable shafts which can be driven by means of respective motors connected to motor drive circuits. Slit openings between the shutter blades can be utilized by means of the electronic shutter circuit to be suitably driven for exposing the pick-up area of the image sensor during practical exposure periods. After all picture pick-up elements in the pick-up area on the surface of the image sensor have been made sensitive to radiation by means of the shutter circuit during the period when the pick-up area is shielded by the main shutter blade, the integration periods of the rows of picture pick-up elements exposed as first and last elements in the pick-up area have become equal as compared with the case where only the initial instant of the photosensitivity period is determined by the shutter circuit. This renders the pick-up or integration period, which can be defined as the period during which pick-up elements are photosensitive and are also exposed, independent of the position occupied by the relevant element on the image sensor and the known shutter shadow effect, also referred to as "shading effect" relating to a difference in integration period is eliminated while the signal levels derived at an equal integration period of the different picture pick-up elements are also equal.

A drawback of the known camera is that two separately journalled shafts and two motors with two motor drive circuits are required. However, the two motor drive circuits are to give the respective shutter blades an accurately determined number of revolutions, and, moreover, the phase relation between the instantaneous positions of the shutter blades must satisfy stringent requirements of accuracy because this relation determines the width of the slit opening and hence the accuracy of the duration of the exposure period. Measures to be taken in this respect make the known camera comparatively expensive.

Since the consumer also wants to pick up, for example, fast moving or brightly exposed objects by means of the camera and display their pictures with a high quality, a desire for shorter exposure periods has become more and more explicit.

This imposes even more stringent requirements on the accuracy with which the phase relation and the uniformity of the rotational speed of the relevant shutter blades is to be maintained, because particularly for the short exposure periods which are then required a small variation of the integration period already leads to troublesome intensity variations in the picture to be displayed after it has been picked up.

It is further to be noted that the effect commonly referred to as the "half line period effect", in which luminance variations covering half a line period occur from frame to frame because the line blanking signals are offset over half a line period from frame to frame with respect to the field-synchronizing signals, is an important effect, notably in the case of short integration periods because the consequences of this effect on the relative differences in the signal levels to be derived from the picture pick-up elements of the image sensor are inversely proportional to the duration of the integration period. Due to the presence of mutual relative differences in the extent of exposure of separate parts of the pick-up area of the image sensor, the effect in the produced image will become visible in the form of brightness fluctuations which are different for the separate parts. This has a detrimental influence on the quality of the image.

It is an object of the invention to provide a camera with which different types of objects can be picked up in a comparatively simple manner also during short integration periods and can subsequently be displayed with a higher accuracy and with more fidelity.

To this end the camera according to the invention is characterized in that the main shutter blade and the auxiliary shutter blade are secured to the same shaft and bound an aperture at an angle which corresponds to a minimum length of the exposure period of the pick-up area of the image sensor, so that notably during short-lasting exposure periods parts of the pick-up area which could be exposed substantially more than other parts due to later shielding by the main shutter blade are at least partly more shielded by the auxiliary shutter blade.

The advantage of the camera according to the invention is that it is achieved by means of this measure that the exposure of the successive rows of picture pick-up elements which are to be exposed in the pick-up area of the image sensor after the initial instant of the photosensitivity period, which generally coincides with the initial instant of the exposure period, is reduced to an increasing extent by the auxiliary shutter blade when the relative difference between the individual exposure periods of the rows of picture pick-up elements increase due to a shorter duration of the exposure period. This difference in individual exposure periods is at least partly compensated for by at least partly shielding the radiation path with the aid of the auxiliary shutter blade in a manner which is very acceptable in practice, more specifically with shorter exposure periods in which such differences are relatively greatest.

The additional advantage of the camera according to the invention is that the main shutter blade and the auxiliary shutter blade are secured to one and the same shaft so that the speed of rotation need only be controlled by one motor and one motor drive circuit, while it is not necessary to monitor or control any phase relation between drive signals of a plurality of various motor drive circuits.

In spite of the fact that the shutter blades extend at a fixed angle with respect to each other, the exposure periods can be arbitrarily adjusted and varied because the initial instant of the exposure period is ensured by the shutter device connected to the image sensor. It is to be noted that under circumstances the initial instant can be chosen without any objection before the instant when the auxiliary shutter blade passes the pick-up area of the image sensor. Under such circumstances, *i.e.* in the case of slightly longer exposure periods, the quality of the images provided by the camera according to the invention appears to be unnoticeably influenced by the the fact that the pickup area of the image sensor is temporarily shielded by the auxiliary shutter blade during the exposure period.

A further advantage of the camera according to the invention is that the consequences of the aforementioned "half line period effect", notably in the case of short exposure periods, appear to be considerably limited because the mutual relative differences in the extent of exposure of the separate parts of the pick-up area of the image sensor are limited.

An embodiment of the camera according to the invention is characterized in that the auxiliary shutter blade has an arc of a circle which is at most so large that the auxiliary shutter blade shields the entire radiation path towards the image sensor.

It is thereby achieved that the two rows of picture pick-up elements located on opposite edges in the pick-up area of the image sensor are not simultaneously shielded by the auxiliary shutter blade so that it is ensured that when varying the initial instant of the exposure period the average integration of the picture pick-up elements also varies. A further advantage of this embodiment of the camera according to the invention is that the auxiliary shutter blade can remain relatively narrow, thus ensuring that the mechanical stability and the balance of the main shutter blade on the shaft is not essentially influenced so that no special measures are required for operating the camera substantially free from vibrations.

A further embodiment of the camera according to the invention is characterized in that the auxiliary shutter blade is transparent.

The exposure of the pick-up area which is influenced by shifting the initial instant of the exposure period by means of the shutter device varies more gradually when using a transparent auxiliary shutter blade, which provides the possibility of fine control of the extent of exposure. This is of special importance, particularly in the case of a short duration of the exposure period, because a variation in the duration of the exposure period is relatively more noticeable with shorter exposure periods than with longer exposure periods.

A further embodiment of the camera according to the invention is characterized in that the extent of transparency of the auxiliary shutter blade depends on the location on the auxiliary shutter blade.

An optionally gradual extent of transparency of the auxiliary shutter blade can thereby be achieved so that, independent of the apertures of lenses to be arranged in the radiation path, a gradual variation of the exposure can be realised when shifting the initial instant of the exposure period.

The invention will now be described in greater detail by way of example with reference to the accompanying drawings in which

Fig. 1 shows a diagram of a camera according to the invention;

Fig. 2 is a schematic representation of a shutter device with a main shutter blade and an auxiliary shutter blade;

Figs. 3a and 3b show stylistic exposure characteristics of two picture pick-up elements A and B located in the pick-up area of the image sensor, and

Figs. 4a and 4b show stylistic exposure characteristics of the points A and B in the case where the auxiliary shutter blade is transparent or is narrower than the radiation path.

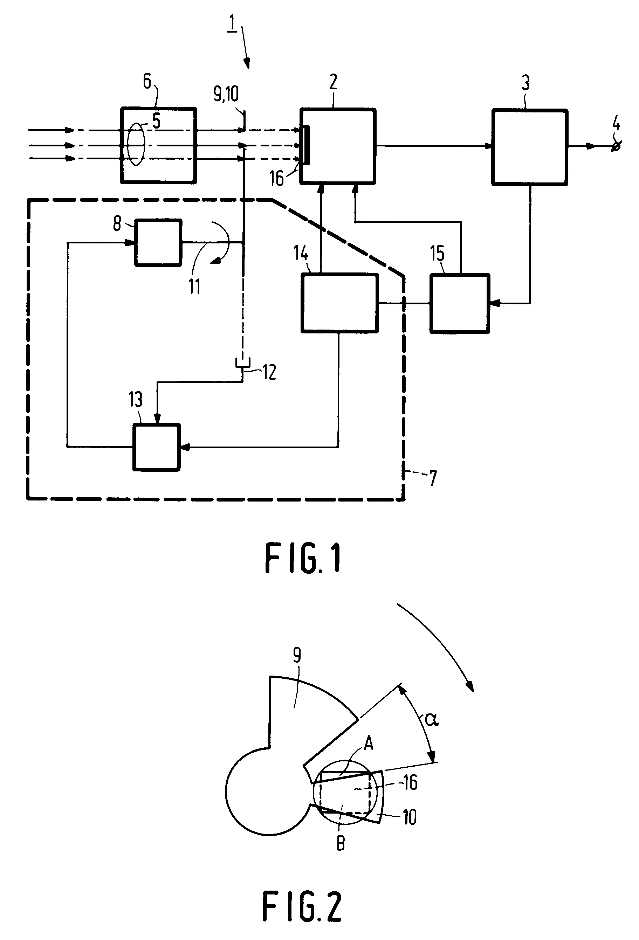

Fig. 1 diagrammatically shows a camera 1 which can be used, for example, for picking up television, photographic and/or cinematographic images. The camera 1 comprises a solid-state image sensor which is, for example, a frame transfer sensor or a combination of a frame transfer sensor and a frame interline transfer sensor. Generally, the sensor 2 has a part which forms the pick-up area and a part which forms the storage area. The pickup area is provided with picture pick-up elements which, after being made sensitive, are capable of converting incident radiation such as light into charge packets which are written in the storage area at a desired instant, whereafter they are processed in a signal processing circuit 3 and made available at an output 4 of the circuit 3. Signal processing operations such as gamma and aperture correction and the like are performed in the circuit 3.

Object images which can be picked up by means of the camera 1 traverse a radiation path 5. If desired, the radiation path 5 may incorporate a lens system 6. A shutter device 7 comprises two shutter blades 9 and 10 in the form of sectors of a circle which are rotatable by means of drive means 8 and at least partly intersect the radiation path 5.

The main shutter blade is denoted by the reference numeral 9 and the auxiliary shutter blade is denoted by the reference numeral 10. The shutter blades 9 and 10 are jointly provided on a shaft 11, which shaft 11 is in mechanical contact with the drive means 8 with which this shaft can be rotated. The shutter device 7 also includes a position-determining member 12 which monitors the position of the shutter blades 9 and 10 and a motor drive circuit 13 connected to the position-determining member 12. The motor drive circuit 13 is connected to the drive means 8 and receives synchronizing signals from the synchronizing circuit 14 incorporated in the shutter device 7. The synchronizing circuit 14 is connected to the sensor 2 and receives drive signals from the drive circuit 15 connected to the circuit 14. The drive circuit 15 is connected to the sensor 2 and to the signal processing circuit 3 from which it receives command signals.

The signals coming from the shutter device 7, either or not in combination with signals applied to the sensor 2 by the drive circuit 15, render the pick-up area in the sensor 2 sensitive to the reception of light at a given initial instant, which light reaches the pick-up area denoted by the reference numeral 16 in Fig. 2 *via* the radiation path 5. The pick-up area is rendered photosensitive, for example, by preventing the depletion of charge in the picture pick-up elements. This initial instant generally also marks the start of an exposure period which ends at a final instant coinciding with the instant when the main shutter blade 9 shields the entire pick-up area 16. During the period when the pick-up area 16 is shielded, the charge stored in the different picture pick-up elements is transferred to the storage area. In this way the known smear effect causing a smear on the ultimately obtained picture extending from exposed parts of the picture to juxtaposed parts of the picture is prevented.

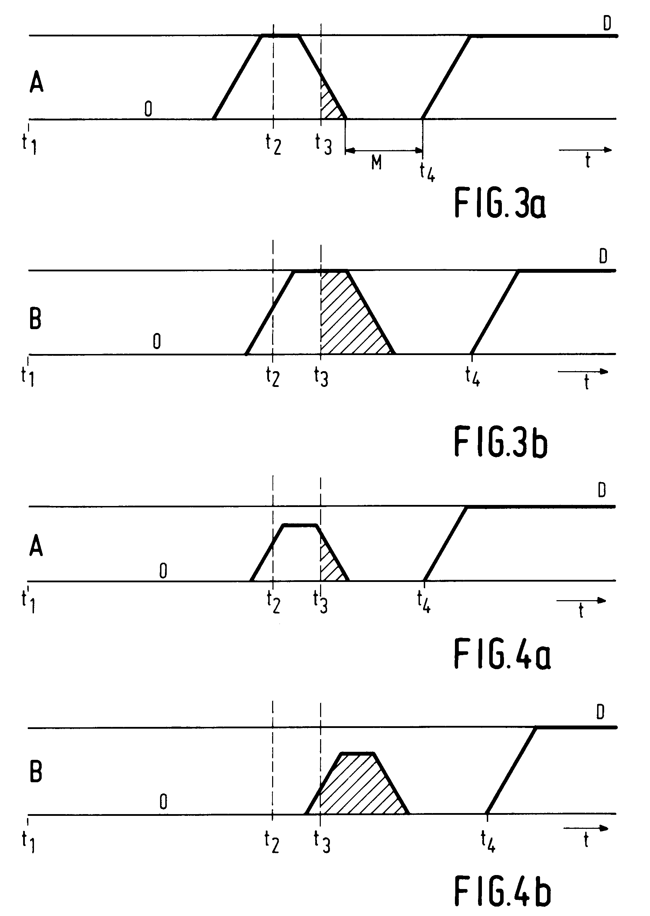

Fig. 2 shows two picture pick-up elements A and B within the pick-up area 16. The associated exposure characteristics of these elements are shown in Figs. 3a and 4a for the element A and in Figs. 3b and 4b for the element B. In these Figures the reference "D" indicates that the relevant element is shielded and the reference "O" indicates that the element is not shielded but is exposed.

Figs. 3a, 3b, 4a and 4b show by way of example initial instants $t_1$, $t_2$ and $t_3$ when an integration period or an exposure period could start. By way of example, exposure periods of different durations end each time at instant $t_4$ when the main shutter blade 9 will first shield the picture pick-up element A and some time later the picture pick-up element B, given the direction of rotation of the shutter blades 9 and 10 indicated by means of the arrow in Fig. 2. In the Figures the effect caused by the auxiliary shutter blade 10 is illustrated by means of the stylistic trapezoidal curve in the different exposure characteristics.

When, for example, at instant $t_1$ the sensor 2 receives the command from the shutter device 7 to render the pick-up area 16 sensitive to exposure *via* the radiation path 5 and when the effect of a possible shielding by means of the auxiliary shutter blade 10 is ignored, the extent of integration or charge build-up in the picture pick-up elements A and B is given by the surface which is located in the exposure characteristics and is bounded by the broken line near $t_1$ and the oblique solid line near $t_4$ and is also bounded by the straight lines which are denoted by "D" and "O". A comparison between the bounded areas in Figs. 3a and 3b shows that the surfaces are substantially equal, while they are more equal as the instant $t_1$ is further away from the respective instant $t_4$. If the effect of shielding by the auxiliary shutter blade 10 on the extent of integration in the respective elements A and B is taken into account, it appears that the aforementioned bounded areas, whose surface is a measure of the exposure of the elements A and B, decrease in surface because the surface of the trapezoidal area produced by shielding with the auxiliary shutter blade 10 must be subtracted therefrom. It appears that for the exposure periods which last longer the effect of shielding the pick-up area 16 with the auxiliary shutter blade 10 slightly reduces the quantity of light ultimately received by the elements. In practice this reduction has been found to be quite acceptable if the arc of the circle of the auxiliary shutter blade is relatively small.

However, when the shorter exposure periods which start at, for example, instant $t_3$, are considered, the effect caused by the auxiliary shutter blade 10 is given by the difference of the parts which are shaded in Figs. 3a and 3b, which difference is subtracted from the extent of exposure with which the element B would be exposed to a greater extent than the element A if the auxiliary shutter blade 10 were not used. For shorter exposure periods the use of the auxiliary shutter blade 10 thus has the advantage in this case that the ratio between the extent of exposure of the elements A and B will be more equal to each other than would be the case without using the auxiliary shutter blade 10.

An explanation relating to an exposure period starting at the instant $t_2$ and ending at the instant $t_4$ corresponds to the explanation given above with reference to the exposure period between $t_3$ and $t_4$. However, since the period between $t_2$ and $t_4$ lasts slightly longer than the shorter exposure period between $t_3$ and $t_4$, and since the difference in surface associated with an initial instant $t_2$ and hence the difference in the extent of exposure is smaller than in the case already explained with reference to an exposure period starting at $t_3$, the advantage for the slightly longer exposure period starting at $t_2$ will be less than that for the exposure period starting at instant $t_3$. Since the extents of integration and exposure of element A and those of element B are more equal to each other in the case of the shorter exposure periods, the detrimental effects such as the afore-mentioned "half line period effect" having a greater influence when the exposure periods are shorter, are eliminated accordingly.

The explanation with reference to Figs. 4a and 4b is verbally equal to the explanation given with reference to Figs. 3a and 3b. However, it is to be noted that in the case of Figs. 4a and 4b the exposure characteristics are shown which relate to a transparent auxiliary shutter blade 10 or to an auxiliary shutter blade which is narrower than the radiation path. The Figures clearly show that the trapezoidal part illustrating the effect of shielding the pick-up area 16 with the auxiliary shutter blade 10, *i.e.* the horizontal line bounding upper portion of this trapezoidal part does not coincide with the horizontal line which is denoted by "D". This means that the shutter blade 10 will not completely shut off the radiation path 5 but will only partly block the rays traversing the path 5. When using a transparent auxiliary shutter blade 10, the extent to which the auxiliary shutter blade 10 compensates the difference in the extent of exposure will be less than when using a non-transparent shutter blade, but a transparent shutter blade is preferred, as has already been explained in the opening paragraph of the description. It is of course also possible to use a transparent auxiliary shutter blade whose extent of transparency is dependent on, for example, the instantaneous rotation position of the shutter blade 10.

Generally, the arc of the circle of the shutter blade 10 will be at most so large that it covers the entire radiation path 5. The advantage of a narrow auxiliary shutter blade is that it reduces the maximum exposure to a small extent only. When a narrower auxiliary shutter blade 10 is used, the trapezoidal area will become accordingly narrower. Fig. 2 shows the angle $\alpha$ which determines the dimension of the aperture between the main shutter blade 9 and the auxiliary shutter blade 10. This angle will generally have such a value that an exposure period is created which is only minimally suitable for the sensor 2 when the shutter blades 9 and 10 pass the pick-up area 16 during exposure only. For the sake of clarity this minimum exposure period is denoted by "M" in Fig. 3a only. It will be clear that M is dependent on the type of sensor and that $\alpha$ is determined by M and the speed of rotation of the shaft 11. If the angle $\alpha$ is chosen to be larger than the angle corresponding to a minimally required exposure period, the previously explained enhancing effect which is achieved with the aid of the auxiliary shutter blade 10 will be less, notably during the very short exposure periods.

## Claims

1. A camera comprising a solid-state image sensor having a pick-up area for picking up images projected onto the image sensor *via* a radiation path, and a shutter device connected to the image sensor and comprising two shutter blades formed as sectors of a circle and being rotatable by drive means, which shutter blades comprise a main shutter blade and an auxiliary shutter blade for influencing the radiation path, the initial instant of a photosensitivity period of the pick-up area of the image sensor being determined by the shutter device and the final instant of the photosensitivity period occurring after interruption of the radiation path by means of the main shutter blade, characterized in that the main shutter blade and the auxiliary shutter blade are secured to the same shaft and bound an aperture at an angle which corresponds to a minimum length of the exposure period of the pick-up area of the image sensor, so that notably during short-lasting exposure periods parts of the pick-up area which could be exposed substantially more than other parts due to later shielding by the main shutter blade are at least partly more shielded by the auxiliary shutter blade.

2. A camera as claimed in Claim 1, characterized in that the auxiliary shutter blade has an arc of a circle which is at most so large that the auxiliary shutter blade shields the entire radiation path towards the image sensor.

3. A camera as claimed in Claim 1 or 2, characterized in that the auxiliary shutter blade is transparent.

4. A camera as claimed in Claim 3, characterized in that the extent of transparency of the auxiliary shutter blade depends on the location on the auxiliary shutter blade.

EP 0 488 460 A1

FIG.1

FIG.2

7

FIG.3a

FIG.3b

FIG.4a

FIG.4b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 377 914 (N.V. PHILIPS' GLOEILAMPEN FABRIEKEN)<br>* column 7, line 10 - line 34 *<br>* column 8, line 14 - line 47 *<br>* column 8, line 56 - column 9, line 21 *<br>* figure 7B * | 1 | H04N5/238<br>H04N5/225 |
| Y | US-A-4 571 629 (HORIO ET AL.)<br>* column 4, line 7 - column 6, line 53 *<br>* figure 5 * | 1 | |
| A | | 2 | |
| A | NEUES AUS DER TECHNIK.<br>no. 3, August 1986, WURZBURG DE<br>pages 2 - 3;<br>ARTICLE 136: 'Drehender einstellbarer Verschluß für Fernsehkameras'<br>* page 2, middle column, line 1 - right column, line 25 * | 1 | |
| A | US-A-4 363 034 (GRANCOIN ET AL.)<br>* column 2, line 45 - column 4, line 43 *<br>* column 5, line 17 - line 31 *<br>* figures 6,7C * | 1,3,4 | TECHNICAL FIELDS SEARCHED (Int. Cl.5)<br><br>H04N3<br>H04N5 |
| A | FR-A-1 073 529 (RADIO CORPORATION OF AMERICA)<br>* page 4, left column, line 10 - line 54 *<br>* figure 5 * | 1,3,4 | |
| A | SMPTE JOURNAL.<br>vol. 97, no. 5, May 1988, US<br>pages 378 - 387;<br>L. THORPE ET AL.: 'New advances in CCD imaging'<br>* page 380; figure 4 * | 2 | |

The present search report has been drawn up for all claims

| Place of search | Date of completion of the search | Examiner |
|---|---|---|
| THE HAGUE | 03 FEBRUARY 1992 | DUHR R.H.J.E. |

EPO FORM 1503 03.82 (P0401)